# EUROPÄISCHE PATENTANMELDUNG

(11) **EP 1 473 102 A2**
(43) Veröffentlichungstag der Anmeldung: **03.11.2004**
(21) Anmeldenummer: 04009634.9
(22) Anmeldetag: 23.04.2004
(51) Int. Cl.: B23B 27/14

(54) **Schneidwerkzeug**

(30) Priorität: 29.04.2003 DE 10319169
(71) Anmelder: Fette GmbH, 21493 Schwarzenbek (DE)
(72) Erfinder: Kölker, Werner, 23909 Ratzeburg (DE)
(74) Vertreter: Patentanwälte Hauck, Graalfs, Wehnert, Döring, Siemons, Schildberg

(57) **Zusammenfassung**

Schneidwerkzeug (10;50) mit mindestens einer Schneidkante (12;54) und angrenzend an die Schneidkante mit mindestens einer Spanfläche (14;56) und mindestens einer Freifläche (16;58), wobei Spanund/oder Freifläche eine Beschichtung (18) nach dem PVD- und/oder CVD-Verfahren aufweist, dadurch gekennzeichnet, dass die Oberfläche der Beschichtung der Freifläche und die Oberfläche der Beschichtung der Spanfläche unterschiedliche den Spanfluß beeinflussende mikrotopographische Eigenschaften aufweisen.

## Beschreibung

Die Erfindung bezieht sich auf ein Schneidwerkzeug nach den Patentansprüchen 1 und 7.

Typisch für ein Schneidwerkzeug ist ein Schneidkeil mit einer Schneidkante, einer Spanfläche und einer Freifläche. Die Spanfläche weist in vielen Fällen zur besseren Abfuhr oder Ableitung der Späne spezielle Formgebungen auf, zum Beispiel Spannuten, Spanbrecherformationen oder dergleichen. Wenn nachfolgend von Flächen, Flächenabschnitten oder dergleichen die Rede ist, sind in erster Linie diese Flächen des Schneidkeils gemeint.

Es ist seit langem bekannt, Schneidwerkzeuge mit einem Hartstoff zu beschichten, um die Eigenschaften des Werkzeugs zu verbessern, insbesondere seine Härte und/oder die Reibungseigenschaften der Flächen. Eine größere Härte reduziert bekanntlich den Verschleiß und führt zu einer höheren Standfestigkeit des Werkzeugs. Eine relativ geringe Oberflächenrauhigkeit der Flächen angrenzend an die Schneidkante verbessert den Spanfluß und das Gleitverhalten. Als Beschichtungsmaterial kommt z. B. TiN, TiAIN, Al₂O₃, TiCN usw. in Betracht. Das Beschichten erfolgt üblicherweise nach dem CVD- oder PVD-Verfahren. Beim CVD-Verfahren wird aus einer Gasphase heraus durch chemische Reaktionen, wie z. B. thermische Zersetzungen, bei Temperaturen von 500 bis 1100° C auf einem Substrat mindestens eine dünne Schicht von Metallen, Carbiden, Titancarbiden, Chromcarbiden, Borcarbiden, Nitriden usw. abgeschieden. Beim PVD-Verfahren erfolgt die Beschichtung durch physikalische Dampfabscheideprozesse mit Hilfe plasmaaktivierter Verfahren unter Vakuum. Beim Ionenplattieren wird in einer Vakuumkammer an das leitfähige Substrat eine elektrische Spannung gelegt und in einer ersten Arbeitsphase zunächst die Oberfläche durch Beschuß mit Argonionen gereinigt. In der zweiten Phase wird das Beschichtungsmaterial verdampft und auf der Oberfläche abgelagert. Hartstoffschichten können mittels PVD bei wesentlich niedrigeren Temperaturen als beim CVD-Verfahren abgeschieden werden.

Das Beschichten von Werkzeugen mit mehr als einer Beschichtung ist aus einer Reihe von U.S.-Patenten bekannt geworden (U.S. 5,143,488, U.S. 5,250,362, U.S. 5,364,209, U.S. 5,750,247, U.S. 5,722,803 oder U.S. 5,879,823). Wenn nachfolgend von einer Beschichtung gesprochen wird, dann impliziert dies auch deren Mehrlagigkeit, d. h. die Beschichtung ist aus einer Mehrzahl von einzelnen Schichten, die nacheinander aufgebracht werden, aufgebaut. Bei den bekannten Verfahren wird häufig im CVD-Verfahren eine erste Beschichtung aufgebracht und anschließend im PVD-Verfahren eine nächste Beschichtung. Alle vorschlagenden Verfahren dienen dem Zweck, die Schneideigenschaften und Standfestigkeit des Werkzeugs zu verbessern.

Aus JP 2 000 042 806 A, EP 109 94 132 A1 oder DE 100 48 899 A1 ist bekannt geworden, sogenannte Indikatorschichten bei Schneidwerkzeugen, insbesondere bei Wendeplatten vorzusehen. Die Indikatorschichten werden z. B. auf der Freifläche aufgebracht. Dies geschieht dadurch, daß zunächst eine erste Beschichtung des kompletten Werkzeugs, beispielsweise mit Al₂O₃, erfolgt und im Anschluß das Aufbringen einer zweiten vollflächigen Beschichtung z. B. auf eine Wendeschneidplatte. Anschließend wird etwa in der Spanfläche die zweite Beschichtung wieder entfernt. Dies ist nicht weiter schwierig, da die Indikatorschicht die gewünschte Eigenschaft hat, bereits bei geringer mechanischer Einwirkung beeinträchtigt bzw. entfernt zu werden.

Aus DE 197 24 319 ist ein Verfahren zur Beeinflussung des Spanflußverhaltens von Werkzeugflächen im Bereich von Schneidkanten bei spanerzeugenden Werkzeugen bekannt geworden, bei dem mit Hilfe einer Laserbestrahlung zumindest die Spanflächen im geringen Abstand zur Schneidkante mit einem die Oberflächenstruktur verändernden geometrischen Muster versehen werden. Hierzu gehört auch das Auftragen von Schichten mit gewünschten den Spanfluß beeinflussenden Eigenschaften mit Hilfe eines Laserstrahls. Durch eine bestimmte Richtungsgebung der das Muster bildenden Markierungen läßt sich z. B. nicht nur die Fließgeschwindigkeit, sondern auch die Fließrichtung der Späne beeinflussen.

Der Erfindung liegt die Aufgabe zugrunde, ein Schneidwerkzeug zu schaffen, bei dem die der Schneidkante benachbarten Oberflächen je nach Beanspruchung im Hinblick auf ihre Eigenschaften optimiert sind.

Diese Aufgabe wird durch die Merkmale der Patentansprüche 1 und 7 gelöst.

Bei dem erfindungsgemäßen Schneidwerkzeug weist die Oberfläche der Beschichtung der Freifläche eine andere Eigenschaft im Hinblick auf das Spanfließverhalten auf, als die Oberfläche der Beschichtung der Spanfläche. Unter unterschiedlicher Eigenschaft ist insbesondere der Reibungswert zu verstehen. Es versteht sich, dass die Reibung immer nur bestimmt werden kann im Hinblick auf einen sogenannten Reibungspartner. Die Reibung einer Oberfläche wird im Wesentlichen bestimmt durch die Rauhigkeit der Oberfläche, die sich bei einer Beschichtung nach dem CVD- oder PVD-Verfahren im 100 nm-Bereich bewegt, und durch die Ädhäsionskräfte zwischen den zusammenwirkenden Flächen von Werkstück und Werkzeug. Zumeist ist erwünscht, die Freifläche glatter beziehungsweise reibärmer zu machen, als die Spanfläche.

Es sind verschiedene Verfahren denkbar, um die Oberflächen beziehungsweise Spanfließeigenschaften einzustellen, oder zu modifizieren. Beispielsweise können den Oberflächen durch gezielte Laserbestrahlung oder durch gezielte Wärmebeeinflussung eine unterschiedliche Gefügestruktur und/oder Mikrotopographie verliehen werden. Dies kann zum Beispiel der Fall sein, wenn sowohl Span- als auch Freifläche mit einer durchgehenden zumindest aber gleichen Beschichtung an der Oberfläche versehen werden und eine der Oberflächen nachträglich durch Wärme- oder Laserbestrahlung in ihrer Mikrotopographie modifiziert wird. Eine alternative Möglichkeit besteht darin, Span- und Freifläche mit einem ersten Beschichtungsmaterial an der Oberfläche zu versehen und anschließend Frei- oder Spanfläche mit einem zweiten Beschichtungsmaterial zu versehen. Schließlich besteht auch die Möglichkeit, Span- und Freifläche jeweils an der Oberfläche mit einem getrennten Beschichtungsmaterial zu versehen.

Bei der Lösung nach Patentanspruch 7 ist vorgesehen, die Oberfläche der Span- und/oder Freifläche mit mindestens einem begrenzten Flächenabschnitt zu versehen. Der Flächenabschnitt weist im Vergleich zur übrigen Oberfläche von Span- und/oder Freifläche unterschiedliche Eigenschaften im Hinblick auf das Spanfließverhalten auf. So kann die Oberflächenreibung des Flächenabschnitts kleiner oder größer sein, als die der übrigen Oberfläche von Span- und/oder Freifläche. Nach einer Ausgestaltung der Erfindung kann die Oberfläche des Flächenabschnitts von einem anderen Beschichtungsmaterial als die Oberfläche der übrigen Fläche von Span- und Freifläche gebildet sein.

Alternativ kann der Flächenabschnitt durch eine gezielte Laserbestrahlung oder Wärmebehandlung einer Oberfläche einer Beschichtung von Span- und/oder Freifläche eine Gefügestruktur und/oder Mikrotopographie aufweisen, die von der Gefügestruktur und/oder der Mikrotopographie der übrigen Oberfläche von Span- und Freifläche unterschiedlich ist.

Nach einer weiteren Ausgestaltung der Erfindung ist eine Mehrzahl von Flächenabschnitten vorgesehen, welche parallel zur Schneidkante ein gleichmäßiges Muster bilden. Das Muster kann aus einzelnen Punkten, Streifen oder dergleichen bestehen, wobei die Erstreckung der Flächenabschnitte quer zur Schneidkante kleiner oder größer sein kann, als parallel zur Schneidkante.

Bei Wendeschneidplatten, die zum Beispiel vier im Rechteck oder im Rombus angeordnete Schneidkanten aufweisen, kann der einen Schneidkante ein erstes Flächenmuster zugeordnet sein, das unterschiedlich ist von dem Flächenmuster, das der zweiten Schneidkante zugeordnet ist.

Gemeinsam ist den Lehren der Ansprüche 1 und 7 das Erzeugen ganzer oder partieller Oberflächen von Span- oder Freifläche, zum Beispiel durch Beschichtung mit einer Hartstoffschicht im PVD-Verfahren auf gewünschte Oberflächenbereiche, beispielsweise auf der Freifläche oder der Spanfläche des Werkzeugs mit für die Freifläche oder die Spanfläche optimierten Eigenschaften.

Vor der Behandlung oder Beschichtung von Flächen des Werkzeugs zur Erzielung bestimmter Oberflächen- beziehungsweise Spanfließeigenschaften für den Zerspanungsprozeß kann die Oberfläche des Werkstücks vorbehandelt sein. So kann eine ganzflächige oder partielle Vorbeschichtung im CVD-Verfahren oder PVD-Verfahren mit einem vorgegebenen Material erfolgen. Statt einer Vorbeschichtung kann eine andere Vorbehandlung vorgenommen werden, beispielsweise ein Nitrieren oder Borieren oder ein sonstiges Diffusionsverfahren, das zu einer Veränderung bzw. Verbesserung des Gefüges im oberflächennahen Bereich des Werkstücks führt.

Es kann dabei so vorgegangen werden, daß eine erste Beschichtung optimierte Eigenschaften im Hinblick auf die Span- oder die Freifläche aufweist. Die zweite Beschichtung, die lediglich im Bereich der Freifläche oder der Spanfläche aufgebracht wird, optimiert die Oberflächeneigenschaften im Hinblick auf diesen Oberflächenbereich des Werkzeugs. Es ist auch denkbar, auf der Basis einer Komplettbeschichtung unterschiedliche zweite Beschichtungen für bestimmte Oberflächenbereiche, beispielsweise Spanund Freifläche, aufzubringen, um die Schneid- und Spanflußeigenschaften sowie weitere Parameter, welche die Qualität eines Schneidwerkzeugs, zum Beispiel Reibung, Härte usw., bestimmen, zu beeinflussen. Es versteht sich, daß für diese Eigenschaften neben der Werkzeuggeometrie im wesentlichen das für das Beschichten verwendete Material oder die Art der Behandlung (Wärme, Laserbestrahlung, chemische Behandlung usw.) maßgeblich ist.

Bei der Beschichtung werden vorgegebene erste Flächenabschnitte des Werkzeugs abgedeckt, wodurch nur vorgegebene zweite Flächenabschnitte mit der Beschichtung oder einem Flächenmuster von Beschichtungen versehen werden. Nach z. B. einer ganzflächigen oder partiellen Vorbeschichtung mit einem ersten Material wird das Werkzeug mit Hilfe einer Schablone abgedeckt, die Löcher, Öffnungen, Schlitze, Muster von Schlitzen oder Öffnungen aufweist, welche die Flächen oder Flächenmuster von zwei Flächenabschnitten bilden.

Die Durchführung dieses Verfahrens gestaltet sich relativ einfach und rationell. Erfolgt z. B. eine erste Beschichtung im PVD-Verfahren, wird im PVD-Verfahren auch die zweite Beschichtung vorgenommen, indem in der Beschichtungskammer die Targets ausgetauscht werden. Ggf. kann die Abdeckung der Werkzeuge in der Beschichtungskammer erfolgen. Vorzuziehen ist jedoch die Anbringung der Abdeckungen der Werkzeuge außerhalb der Beschichtungskammer, da üblicherweise eine Charge aus einer Vielzahl von Werkzeugen besteht, die mit Hilfe einer geeigneten Träger- oder Haltestruktur in der Beschichtungskammer gehalten werden.

Im PVD-Verfahren bildet das Werkstück eine Elektrode, und mindestens ein Target, das aus dem Beschichtungsmaterial besteht, stellt eine weitere Elektrode dar. Bei einem anderen Verfahren wird Gebrauch davon gemacht, daß das elektromagnetische Feld mit Hilfe geeigneter Mittel gerichtet und/oder beeinflußt werden kann; dies zu dem Zweck, im Beschichtungsgang nur ganz bestimmte Flächenbereiche mit dem Beschichtungsmaterial zu beschichten, indem das Werkstück zum einen in geeigneter Weise angeordnet und zum anderen das Feld in gewünschter Weise beeinflußt wird. In diesem Zusammenhang ist auch denkbar, Hilfselektroden, Abschirmungen, Blenden oder dergleichen vorzusehen, die feldbeeinflussenden Charakter haben und gleichzeitig eine Abdeckung bilden.

Bei einem dritten Verfahren wird davon Gebrauch gemacht, daß es bekannt ist, die zu beschichtenden Werkstücke in der Beschichtungskammer entlang vorgegebener Bahnen zu bewegen, damit ein möglichst gleichmäßiger Auftrag zustande kommt. Es ist auch bekannt, zum gleichen Zweck mindestens zwei Targets in der Beschichtungskammer anzuordnen, deren Wirkungsrichtung etwa um 90° versetzt liegt. Es ist bekanntlich ein Unterschied, ob eine Fläche des Werkstücks in der Beschichtungskammer dem Target zugekehrt ist oder auf der Schattenseite liegt. Durch Verwendung von z. B. Targets mit unterschiedlichem Material und durch eine geeignete Bewegungsbahn der Werkstücke läßt sich auf diese Weise erreichen, daß bestimmte Flächenbereiche des Werkstücks mit einem und andere Flächenbereiche mit dem anderen Material beschichtet werden. Zu diesem Zweck werden nicht nur die Werkstücke entlang vorgegebener Bahnkurven bewegt, sondern die Targets auch synchron dazu wahlweise aktiviert und deaktiviert, um das gewünschte Ergebnis zu erreichen.

Mit Hilfe der beschriebenen Verfahren läßt sich auf einfache Weise jeweils eine optimale Schicht für unterschiedlich beanspruchte Oberflächenbereiche des Werkzeugs erreichen. Optimale Eigenschaft meint etwa den Reibungskoeffizienten, die Härte, (Warmhärte), den Diffusionskoeffizienten, die Löslichkeit, die Oxidationsbeständigkeit, die Verschleißfestigkeit, die Rauhigkeit, die Temperaturfestigkeit, die Textur und dergleichen. So kann z. B. die Spanfläche mit Al₂O₃ beschichtet sein und die Freifläche mit TiN. Alternativ kann die Spanfläche mit TiAlN und die Freifläche mit TiN beschichtet sein. Falls das Werkzeug eine Spannut aufweist, kann deren Oberfläche mit einer dritten Beschichtung versehen werden. Insgesamt kommen als Beschichtungsmaterialien z.B. TiN, TiCN, TiAIN, TiAlSiN, TiAlCN, Al₂O₃ oder ZrO₂ CrN, a-CH u. a. in Frage.

Durch ein Beschichten nach einem vorgegebenen Muster läßt sich auch eine gewünschte Topografie erzeugen, um spanflußbeeinflussende Eigenschaften zu erzeugen oder zu verbessern.

Das erfindungsgemäße Verfahren soll anhand von in Zeichnungen dargestellten Ausführungsbeispielen näher erläutert werden.
- Fig. 1: zeigt perspektivisch eine kreisrunde Schneidplatte mit einer Beschichtung nach der Erfindung.
- Fig. 2: zeigt eine Schablone zur Erzielung der Beschichtung der Schneidplatte nach Fig. 1.
- Fig. 3: zeigt die Draufsicht auf eine andere Ausbildung einer Scheibenschablone mit verschiedenen beispielhaften Mustern.
- Fig. 4: zeigt perspektivisch eine Topfschablone zur Herstellung einer erfindungs gemäßen Beschichtung.
- Fig. 5: zeigt perspektivisch ein Fräswerkzeug mit einer Hilfselektrode für eine erfindungsgemäße Beschichtung.
- Fig. 6 bis 8: zeigen Draufsichten auf gottardische Schneidplatten nach der Erfindung.
- Fig. 9: zeigt einen Schnitt durch einen Teil einer Schneidplatte nach derErfindung.
- Fig. 10: zeigt eine ähnliche Darstellung wie Figur 9, jedoch mit einer anderen Beschichtung.
- Fig. 11: zeigt ein Härte-Temperaturdiagramm.

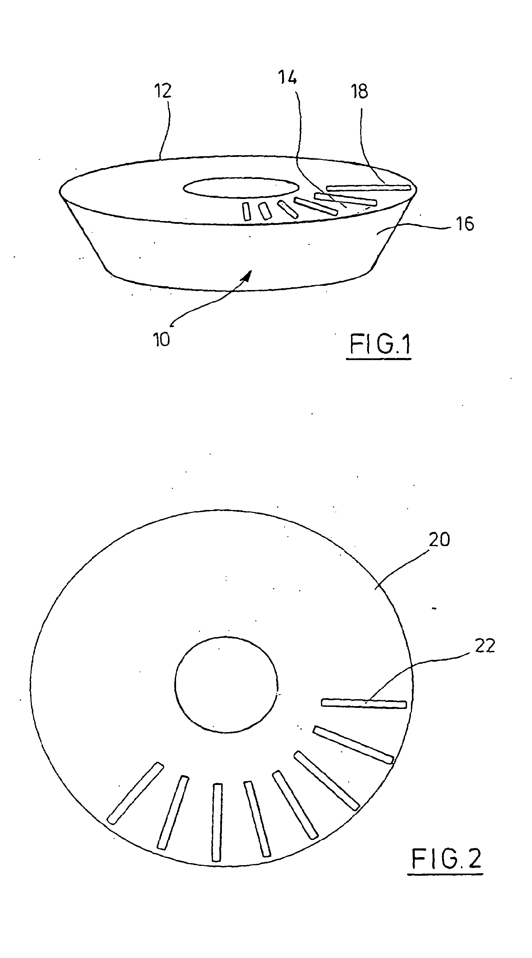

In Fig. 1 ist eine Schneidplatte 10 mit kreisrunder Schneidkante 12 dargestellt, die eine Spanfläche 14 und eine Freifläche 16 aufweist. Wie zu erkennen, ist auf der Spanfläche ein Muster von radialen beabstandeten streifenförmigen Beschichtungen 18 vorgesehen. Die Schneidplatte 10 ist insgesamt mit einer Beschichtung aus geeignetem Material im CVD- oder PVD-Verfahren versehen, z. B. mit Al₂O₃ oder mit TiAlN. Die streifenförmigen Beschichtungen 18 sind aus einem anderen Material ebenfalls im PVD-Verfahren aufgebracht und optimieren das Verhalten der Spanfläche, beispielsweise indem die Beschichtung 18 für einen besseren Spanfluß sorgt.

In Fig. 2 ist eine Kreisschablone dargestellt, mit der die Oberseite der Schneidplatte 10 nach dem ersten Beschichtungsgang abgedeckt wird, um die streifenförmigen Beschichtungen 18 zu ermöglichen. Zu diesem Zweck ist die Schablone 20 mit rechteckigen länglichen radialen Schlitzen 22 versehen. Die Schlitze 22 ermöglichen mithin eine Beschichtung der Spanfläche 14 der Schneidplatte 10 nur in streifenförmigen Abschnitten. Bei dem Beschichtungsverfahren in einer nicht gezeigten Beschichtungskammer für das PVD-Verfahren kann die Schablone 20 in geeigneter Weise an der Schneidplatte 10 angelegt werden, beispielsweise durch Anordnung zwischen den Schneidplatten bei ihrer Stapelung übereinander in der Beschichtungskammer.

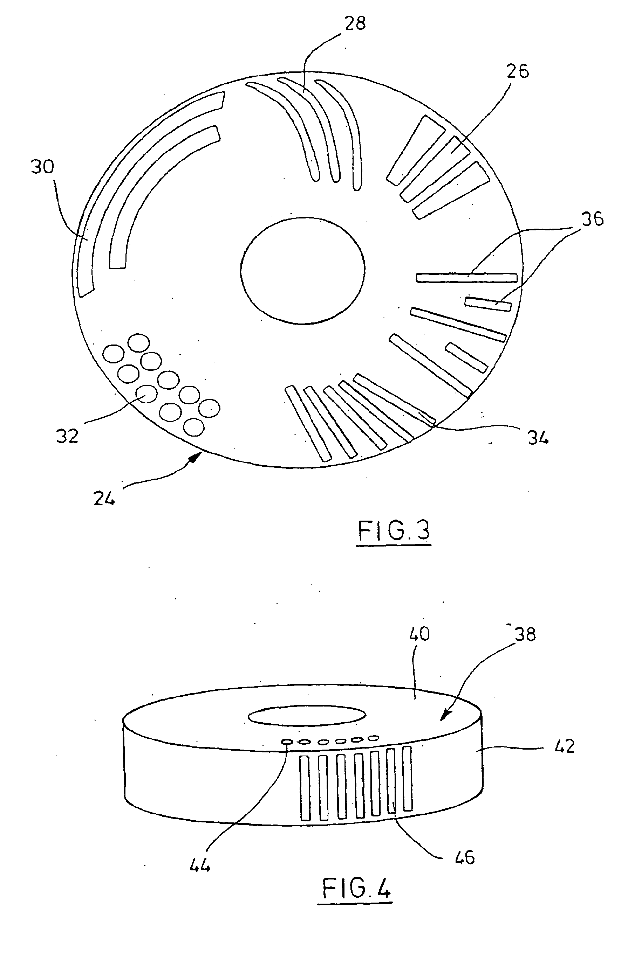

In Fig. 3 ist eine Kreisschablone 24 gezeigt, ähnlich der Schablone 20 nach Fig. 2 mit unterschiedlichen Schlitzmustern. Bei 26 sind Trapezschlitze, bei 28 bogenförmige Schlitze, bei 30 konzentrische Bogenschlitze, bei 32 ein Lochmuster, bei 34 gewinkelte Rechteckschlitze und bei 36 radiale Rechteckschlitze unterschiedlicher Länge gezeigt. Die einzelnen Schlitzmuster sollen nur als Beispiele dienen. Für den jeweiligen Anwendungsfall wird naturgemäß nur eines der Muster für die gesamte Schablone eingesetzt.

In Fig. 4 ist eine Topfschablone 38 gezeigt, welche auf eine Schneidplatte 10 nach Fig. 1 gesetzt werden kann. Der Umfang der Topfschablone 38 entspricht etwa dem Umfang der Schneidkante 12. Der Topfboden 40 bedeckt mithin die Spanfläche 14 und die Wand 42 bedeckt die Freifläche 16. Man erkennt, daß der Boden 40 mit einem Lochmuster 44 versehen ist und die Wand 42 mit achsparallelen Rechteckschlitzen 46. Lochmuster 44 und Schlitze 46 sind nur für einen bestimmten Bereich angedeutet, können sich jedoch über den gesamten Umfang der Topfschablone 38 erstrecken. Mit Hilfe einer derartigen Topfschablone kann mithin auf der Freifläche 16 bzw. der Spanfläche 14 der Schneidplatte 10 ein korrespondierendes Muster in einer zweiten Beschichtung erzeugt werden.

Anhand der Beispiele der Fign. 1 bis 4 ist gezeigt, wie durch eine geeignete Abdeckung bestimmter Flächenbereiche eine zweite Beschichtung mit einem geeigneten Material zur Optimierung der Funktion der betreffenden Fläche erreicht wird. In Fig. 5 ist ein Fräswerkzeug 50 mit gewendelter Spannut 52 gezeigt, so daß eine gewendelte Schneidkante 54, eine gewendelte Spanfläche 56 und eine gewendelte Freifläche 58 gebildet ist. In einer der gezeigten Spannuten 52 ist eine Hilfselektrode 60 angeordnet, die naturgemäß ebenfalls eine Wendelform aufweist. Sie deckt die Spannut und die Spanfläche ab, beeinflußt jedoch durch ihr elektromagnetisches Feld die Feldlinien zwischen dem Fräswerkzeug 50 und dem Target für das Beschichten nach dem PVD-Verfahren in der Beschichtungskammer, so daß z. B. hier nur die Freifläche in geeigneter Weise mit einem die Funktion der Freifläche 58 optimierenden Material beschichtet wird.

Die unterschiedlichen Beschichtungsmaterialien, wie sie bei der Ausführungsform anhand der Figuren 1 bis 5 verwendet werden, sollen die Eigenschaften von Span- und Freifläche optimieren. Bekanntlich sind im Hinblick auf die Spanfläche andere Anforderungen gestellt, als bei der Freifläche. Außerdem hängt das Optimum von Frei- und Spanfläche auch von dem Werkstückmaterial ab, insbesondere davon, welche spanbildende Eigenschaft das Werkstückmaterial aufweist.

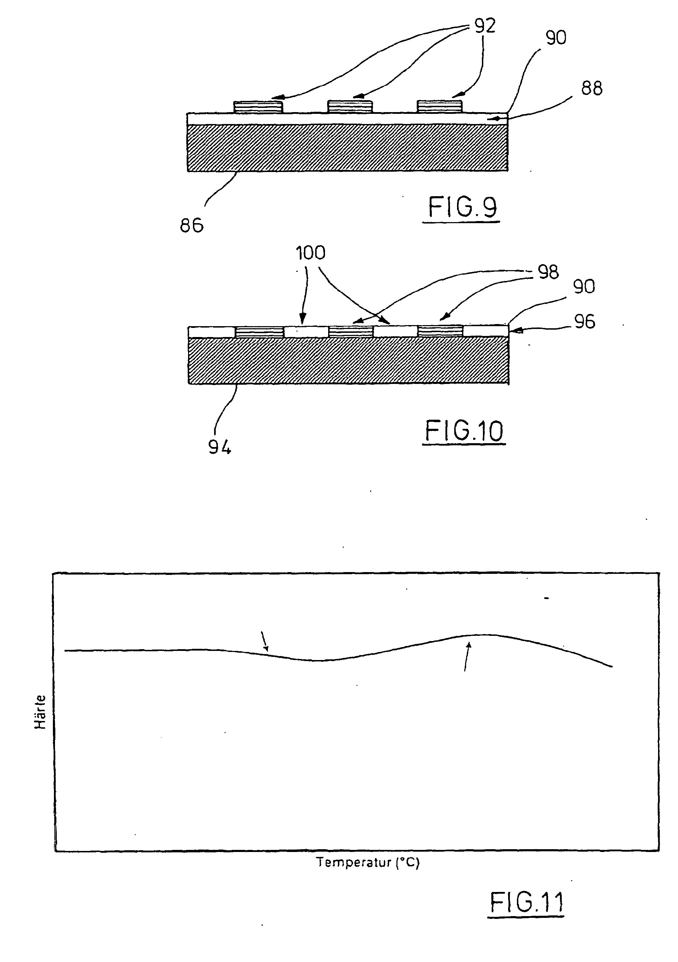

Das in den Figuren 1 bis 4 dargestellte Muster kann statt mit einer zusätzlichen oder anderen Beschichtung auch dadurch erzeugt werden, dass bestimmten Flächenabschnitten andere physikalische Eigenschaften verliehen werden, dadurch, dass eine partielle Behandlung erfolgt, beispielsweise mit Wärme- oder mit Laserbestrahlung. Bekanntlich führt eine Wärmebehandlung je nach eingestellter Temperatur zu einer Härteabnahme aufgrund des Abbaus von Eigenspannungen oder zu einer Härtezunahme durch thermisch aktivierte Ausscheidung von Nanopartikeln, wie dies anhand von Figur 11 dargestellt ist. Bei mittleren Temperaturen von 400° bis 600° C ergibt sich ein Abbau von Eigenspannungen und bei höheren Temperaturen ab 700° C bis 1.000° C eine Zunahme der Härte. Ein Härteanstieg im Hochtemperaturbereich findet nicht bei jeder Art von Beschichtung statt. Sie ist jedoch bekannt für sogenannte ALTIN-Schichten. Es handelt sich dabei um eine sogenannte spinodale Entmischungsreaktion im Kristallgitter der Beschichtung. Die dabei entstehenden, nur einige Nanometer großen Ausscheidungen führen zu einer makroskopischen Härtesteigerung der Beschichtung.

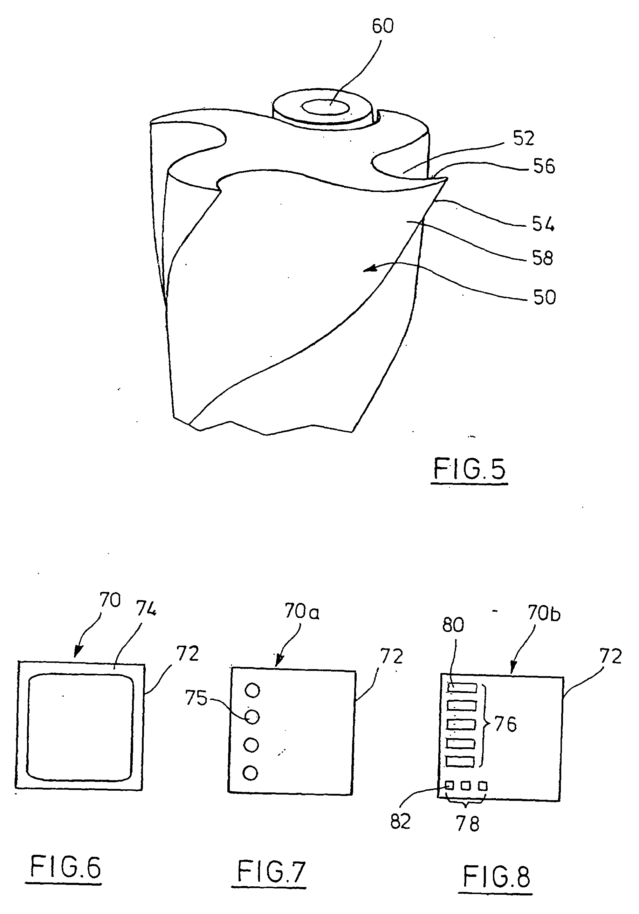

In Figur 6 ist die Draufsicht auf eine erste quadratische Wendeschneidplatte 70 gezeigt, mit vier Schneidkanten 72 und einer umlaufenden Spanfläche 74, die andere Spanfließeigenschaften beziehungsweise Reibungswerte aufweist als die Freifläche, die hier nicht gezeigt ist.

Bei der quadratischen Wendeschneidplatte 70 a in Figur 7 mit den Schneidkanten 72 ist bezüglich einer Schneidkante ein Muster aus kreisrunden Flächenabschnitten 74 in Reihe annähernd parallel und im Abstand zur Schneidkante dargestellt. Bei der Wendeschneidplatte 70 b nach Figur 8 mit den Schneidkanten 72 sind zwei Muster 76, 78 von Flächenabschnitten 80 beziehungsweise 82 in Reihenanordnung vorgesehen. Die Flächenabschnitte 80 bilden ein gleichmäßiges Muster parallel zur Schneidkante 72 und im Abstand dazu, während die Flächenabschnitte 82 ein gleichmäßiges Muster parallel zur unteren Schneidkante in Abstand dazu bilden. Die in den Figuren 6 bis 8 dargestellten Flächenabschnitte weisen bezüglich des Spanflußes andere Eigenschaften auf, als die benachbarten Flächenbereiche beziehungsweise die Oberfläche der nicht gezeigten Freifläche, die selbstredend ebenfalls mit einem gewünschten Flächenmuster versehen werden kann. Wie schon erwähnt, können die Flächenabschnitte 74, 75, 80 und 82 durch eine zusätzliche Beschichtung mit einem geeigneten Beschichtungsmaterial erzeugt werden, oder durch Laser- oder thermische Behandlung, um die Härte, die Reibung oder sonstige die Spanflußeigenschaften beeinflussenden physikalischen Werte zu erzeugen. Dies ist etwa anhand von Figur 9 und 10 etwas deutlicher herausgestellt.

In Figur 9 ist ein Substrat 86, etwa eine Wendeschneidplatte, mit einer ersten Beschichtung 88 versehen, welche zum Beispiel sowohl die Span- als auch die Freifläche des Schneidkeils bedecken kann. In Figur 9 soll zum Beispiel die Beschichtung 88 diejenige an der Spanfläche sein. Die Schneidkante liegt zum Beispiel bei 90. Wie erkennbar, ist durch partielles Beschichten mit einem zweiten Beschichtungsmaterial ein Flächenmuster 92 gebildet, wobei das Beschichtungsmaterial des Flächenmusters 92 andere Spanfließeigenschaften aufweist, als die erste Beschichtung 88. Außerdem wird eine Höhentopographie erzeugt. Es versteht sich, dass jede Beschichtung 88, 92 aus einer Vielzahl von einzelnen Schichten zusammengesetzt sein kann.

In Figur 10 ist ein Substrat 94, beispielsweise eine Wendeschneidplatte, mit einer einzigen Beschichtung 96 versehen, die wiederum aus einer Vielzahl von Einzelschichten bestehen kann. Durch gezielte Behandlung werden partiell besondere Flächenbereiche erzeugt, so beispielsweise die Flächenbereiche 98 und 100. Die Flächenbereiche 100 gleichen in ihren Eigenschaften dem ursprünglich aufgebrachten Beschichtungsmaterial der Beschichtung 96. In den Flächenbereichen 98 erfolgt eine gezielte Temperaturbehandlung zum Beispiel durch Laserbestrahlung oder dergleichen, wodurch eine mikrotopographische Materialstrukturierung erzeugt ist. Somit haben die Flächenbereiche 98 im Hinblick auf das Spanflußverhalten des Werkzeugs andere Eigenschaften als die Flächenbereiche 100.

## Patentansprüche

1. Schneidwerkzeug mit mindestens einer Schneidkante und angrenzend an die Schneidkante mit mindestens einer Spanfläche und mindestens einer Freifläche, wobei Span- und/oder Freifläche eine Beschichtung nach dem PVD- und/oder CVD-Verfahren aufweist, **dadurch gekennzeichnet, dass** die Oberfläche der Beschichtung der Freifläche und die Oberfläche der Beschichtung der Spanfläche unterschiedliche den Spanfluß beeinflussende mikrotopographische Eigenschaften aufweisen.

2. Schneidwerkzeug nach Anspruch 1, **dadurch gekennzeichnet, dass** die Oberflächenreibung der Spanfläche größer oder kleiner als die der Freifläche ist.

3. Schneidwerkzeug nach Anspruch 1 oder 2, **dadurch gekennzeichnet, dass** die Oberfläche von Span- und Freifläche von unterschiedlichem Beschichtungsmaterial gebildet sind.

4. Schneidwerkzeug nach Anspruch 1 oder 2, **dadurch gekennzeichnet, dass** die Oberflächenbeschichtung von Span- und/oder Freifläche durch eine gezielte Laserbestrahlung eine unterschiedliche Gefügestruktur, Härte und/oder Mikrotopographie aufweist.

5. Schneidwerkzeug nach Anspruch 1 oder 2, **dadurch gekennzeichnet, dass** die Oberflächenschichten von Span- und/oder Freifläche durch gezielte Wärmebehandlung eine unterschiedliche Gefügestruktur, Härte und/oder Mikrotopographie aufweisen.

6. Schneidwerkzeug nach Anspruch 3, **dadurch gekennzeichnet, dass** Span- und Freifläche mit einem ersten Beschichtungsmaterial beschichtet sind und umgekehrt die Oberfläche von Frei- oder Spanfläche von einem zweiten Beschichtungsmaterial gebildet ist.

7. Schneidwerkzeug mit mindestens einer Schneidkante und angrenzend an die Schneidkante mit mindestens einer Spanfläche und mindestens einer Freifläche, wobei eine Beschichtung von Span- und/oder Freifläche nach dem PVD- und/oder CVD-Verfahren vorgesehen ist, **dadurch gekennzeichnet, dass** die Oberfläche der Span- und/oder Freifläche mindestens einen begrenzten Flächenabschnitt (74, 75, 80, 82) aufweist und der Flächenabschnitt im Vergleich zur übrigen Span- und/oder Freifläche unterschiedliche Eigenschaften im Spanfließverhalten aufweist.

8. Schneidwerkzeug nach Anspruch 7, **dadurch gekennzeichnet, dass** die Oberflächenreibung des Flächenabschnitts (74, 75, 80, 82) kleiner oder größer ist, als die der übrigen Oberfläche von Span- und/oder Freifläche.

9. Schneidwerkzeug nach Anspruch 7 oder 8, **dadurch gekennzeichnet, dass** die Oberfläche des Flächenabschnitts (92) von einem anderen Beschichtungsmaterial als die übrige Oberfläche von Span- und/oder Freifläche gebildet ist.

10. Schneidwerkzeug nach Anspruch 7 oder 8, **dadurch gekennzeichnet, dass** der Flächenabschnitt (98) durch gezielte Laserbestrahlung oder Wärmebehandlung einer Oberfläche einer Beschichtung (96) von Span- und/oder Freifläche eine Gefügestruktur und/oder Mikrotopographie aufweist, die von der Gefügestruktur und/oder Mikrotopographie der übrigen Oberfläche unterschiedlich ist.

11. Schneidwerkzeug nach einem der Ansprüche 7 bis 10, **dadurch gekennzeichnet, dass** parallel zur Schneidkante (72) mehrere Flächenabschnitte (75, 80, 82) ein gleichmäßiges Muster bilden.

12. Schneidwerkzeug nach Anspruch 11, **dadurch gekennzeichnet, dass** die Erstreckung des Flächenabschnitts (80) quer zur Schneidkante (72) kleiner oder größer ist, als parallel zur Schneidkante (72).

13. Schneidwerkzeug nach einem der Ansprüche 7 bis 12, wobei zwei benachbarte Schneidkanten sich in einem Winkel schneiden, **dadurch gekennzeichnet, dass** der ersten Schneidkante mindestens ein erster Flächenabschnitt (80) der zweiten Schneidkante ein zweiter Flächenabschnitt (82) zugeordnet ist, wobei die Oberflächen von erstem und zweitem Flächenabschnitt (80, 82) in ihrer Kontur, Topographie und/oder in ihren Spanfließeigenschaften unterschiedlich sind.
